# EUROPÄISCHE PATENTSCHRIFT

(11) **EP 1 003 650 B1**
(45) Veröffentlichungstag und Bekanntmachung des Hinweises auf die Patenterteilung: **12.12.2001**
(21) Anmeldenummer: 98946282.5
(22) Anmeldetag: 06.08.1998
(51) Int. Cl.: B60K 17/22

(54) **VORDERACHSABTRIEB EINES AUTOMATGETRIEBES**
FRONT-AXLE OUTPUT OF AN AUTOMATIC TRANSMISSION
SORTIE DE PONT AVANT D'UNE TRANSMISSION AUTOMATIQUE

(30) Priorität: 12.08.1997 DE 19734858
(43) Veröffentlichungstag der Anmeldung: 31.05.2000
(73) Patentinhaber: ZF FRIEDRICHSHAFEN Aktiengesellschaft, 88038 Friedrichshafen (DE)
(72) Erfinder: BARTHEL, Lothar, D-88074 Meckenbeuren (DE)
(86) Internationale Anmeldenummer: EP9804901
(87) Internationale Veröffentlichungsnummer: WO9907570

(56) Entgegenhaltungen:
- DE-A- 2 110 012
- FR-A- 2 052 220
- GB-A- 912 675
- GB-A- 1 078 720
- US-A- 3 550 474
- US-A- 5 279 186
- "AUDI A4; Transmissions automatique" REVUE TECHNIQUE AUTOMOBILE, Bd. 51, Nr. 581, Februar 1996, Seiten 66-73, XP002088901 Boulogne-Billancourt, FR
- FOERSTER, HANS JOACHIM: "Automatische Fahrzeuggetriebe" 1991 , SPRINGER VERLAG , DE,BERLIN XP002088902 in der Anmeldung erwähnt siehe Seite 472 - Seite 473; Abbildungen 14.37A-C

## Beschreibung

Die Erfindung betrifft einen Vorderachsabtrieb eines Automatgetriebes nach der im Oberbegriff von Anspruch 1 näher definierten Art.

Ein gattungsgemäßes Vorderachsgetriebe, das 4 HP 18 der Anmelderin, ist z. B. aus dem Buch "Automatische Fahrzeuggetriebe", Verfasser: H. J. Förster, Springer Verlag 1991, Seite 473, bekannt. Dieses bekannte Getriebe weist einen Vorderachsabtrieb auf, welcher derart gestaltet ist, daß ein Moment von einem Vorderachsstirntrieb mit einem Antriebsrad über ein Zwischenrad auf ein Abtriebsrad übertragen wird, wobei das Antriebs-, Zwischen- und Abtriebsrad jeweils als Stirnrad ausgeführt ist. In der Nabe des Abtriebsrades ist eine Ritzelwelle eines in ein Differential eingreifenden und als Kegeltrieb ausgebildeten Ritzels formschlüssig gelagert. Neben der Abstützstelle in der Abtriebsradnabe ist die Ritzelwelle in einem an das Ritzel angrenzenden Bereich gelagert.

Das als Stirnrad ausgeführte Abtriebsrad ist an beiden Seiten der Verzahnung jeweils mit einem Kegelrollenlager und mit einer Einstellscheibe gelagert. Das auf der dem Differential abgewandten Seite angeordnete Kegelrollenlager ist mit seinem äußeren Rollbahnkörper in einem Deckel des Vorderachsabtriebsgehäuses eingepaßt und abgestützt. Der äußere Rollbahnkörper des anderen Kegelrollenlagers ist in einem zwischen dem Deckel und dem Vorderachsabtriebsgehäuse angeordneten Zwischenplatte abgestützt, wobei das Gehäuse mit der Zwischenplatte abgedichtet ist.

An der dem Differential bzw. dem Ritzel zugewandten Seite des Abtriebsrades schließt sich eine Distanzhülse mit einem Tellerfederpaket und ein Parksperrenrad an, wobei diese Bauteile über die Ritzelwelle geführt sind. Das Parksperrenrad liegt mit seinem dem Abtriebsrad abgewandten Ende an einer Wellenschulter der Ritzelwelle und mit seinem anderen Ende an dem Tellerfederpaket an, welches durch die Distanzhülse an dem Abtriebsrad abgestützt ist.

Ein Nachteil dieser bekannten Lösung ist das Erfordernis einer hohen Teilevielfalt und eines entsprechend großen Montageaufwandes, wodurch sich hohe Kosten für die Herstellung und eventuell anfallende Reparaturarbeiten ergeben.

Die FR 2.052.220 A offenbart einen Vorderachsabtrieb eines Automatgetriebes, dessen Abtriebsstirnrad mit einem Antriebsrad wirkverbunden ist und zur Übertragung eines Drehmoments an ein Differential mit einer koaxial angeordneten Ritzelwelle verbunden ist. Das Ritzel der Ritzelwelle greift in das Differential ein. Das Abtriebsstirnrad ist hierbei einstückig mit einer Seitenwelle ausgebildet. Die Seitenwelle ist mit der Ritzelwelle zwischen einer Lagerung des Ritzels und der Ritzelwelle und einer Abtriebsstirnradlagerung wirkverbunden.

Aus der GB 912 675 A schießlich ist ein Vorderachsantrieb eines Schaltgetriebes laut dem Oberbegriff des Anspruchs 1 bekanntgeworden, bei dem ein Abtriebsstirnrad einstückig mit einer Welle ausgebildet ist, welche über eine Steckverzahnung mit einem Ritzel zum Antrieb eines Differentials wirkverbunden ist. Die Lagerung des Abtriebsstirnrades ist hierbei schwimmend ausgeführt. Nachteilig ist auch hier der hohe Montageaufwand und ein hohes Gewicht.

Der vorliegenden Erfindung liegt daher die Aufgabe zugrunde, einen Vorderachsabtrieb eines Automatgetriebes zu schaffen, welcher eine Zeutrierung zur Fluchtung der Ritselwelle und der Seitenwelle Selbst bei Fertigungsungenanigkeiten ermöglicht.

Erfindungsgemäß wird diese Aufgabe durch die in dem unabhängigen Anspruch 1 genannten Merkmale gelöst.

Durch die Ausgestaltung des Abtriebsstirnrades mit einer axialen Verlängerung als Seitenwelle kann die Verbindungsstelle zwischen der Ritzelwelle und dem Abtriebsstirnrad bzw. der Seitenwelle in einen Bereich mit niedriger Biegebeanspruchung in Richtung Ritzellagerung verlegt werden, wobei die bereits vorhandene Abstützung im Bereich der Ritzellagerung genützt werden kann.

Vorteilhafterweise kann die Seitenwelle wie auch Ritzelwelle in diesem Bereich mit einem geringeren Durchmesser bzw. mit einer geringeren Wandstärke als im Bereich der Abtriebsstirnradlagerung und der Ritzellagerung dimensioniert werden, da diese durch die Verlegung ihrer Verbindungsstelle aus dem Bereich höchster Krafteinleitung und Biegebeanspruchung an der Abtriebsstirnradlagerung ein geringeres Biegewiderstandsmoment an der Verbindungsstelle aufweisen können. Daraus ergibt sich der Vorteil einer Material- und Gewichtsersparnis, wobei die Seitenwelle in ihrem an das Abtriebsstirnrad grenzenden Bereich dennoch biegesteif ausgeführt sein kann.

Darüber hinaus ist bei der Abstützung der Seitenwelle mit dem Abtriebsstirnrad auf eine beidseitige Lagerung des Abtriebsstirnrades verzichtet worden, wodurch beispielsweise ein ritzelseitiges Wälzlager mit entsprechender Abstützung in einer eigens dafür vorgesehenen Zwischenplatte mit zusätzlichen Dichtstellen eingespart werden kann.

Die erhebliche Vereinfachung der Konstruktion bietet des weiteren den Vorteil, daß Montage- und Fertigungsaufwand verringert werden.

Eine weitere Vereinfachung der Vorderachsabtriebsgestaltung ergibt sich, wenn die Seitenwelle einstückig mit einem Parksperrenrad ausgeführt ist. Dadurch können vorteilhafterweise zusätzliche Befestigungselemente für das Parksperrenrad sowie die Montage von diesem eingespart werden.

Vorteilhafte Weiterbildungen und Ausgestaltungen der Erfindung ergeben sich aus den weiteren Unteransprüchen und aus dem nachfolgend anhand der Zeichnung prinzipmäßig beschriebenen Ausführungsbeispiel.
Es zeigt:
- Fig. 1: einen schematisierten Querschnitt eines Abtriebsstirnrades eines Vorderachsabtriebes mit einer Seitenwelle, welche mit einer Ritzelwelle verbunden ist;
- Fig. 2: eine vergrößerte Darstellung der Verbindungsstelle zwischen der Seitenwelle und der Ritzelwelle mit einem dazwischen angeordneten Distanzring gemäß Fig. 1 vor der Befestigung durch ein Befestigungselement und
- Fig. 3: eine vergrößerte Darstellung der Verbindungsstelle zwischen der Ritzelwelle und der Seitenwelle gemäß Fig. 1 mit einem dazwischen angeordneten Distanzring nach der Montage eines Befestigungselementes.

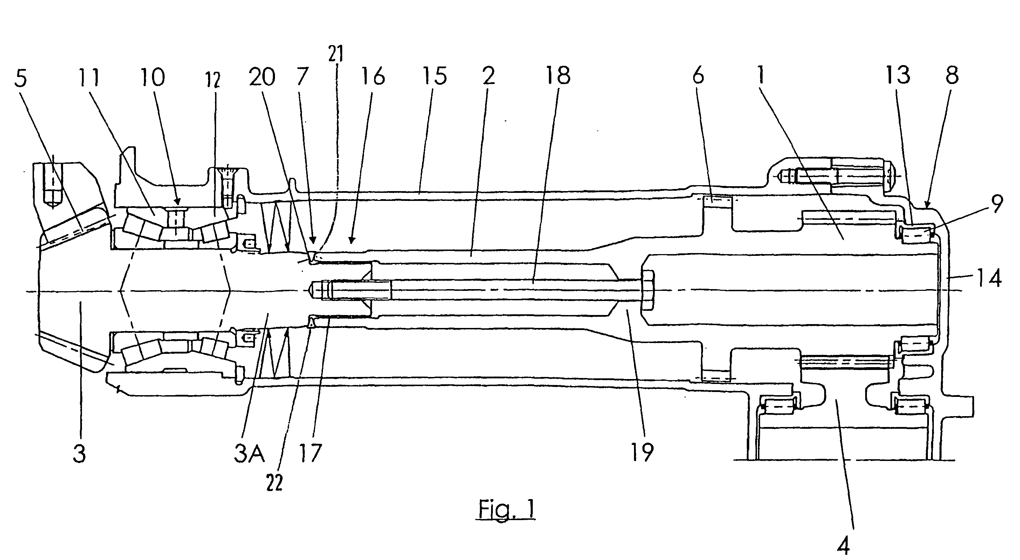

In Fig. 1 ist ein Abtriebsstirnrad 1 eines Vorderachsabtriebes eines Allrad-Automatgetriebes dargestellt, welches mit einer Seitenwelle 2 einstückig ausgebildet ist und mit einer Ritzelwelle 3A verbunden ist.

Das Abtriebsstirnrad 1 greift mit seinen Zähnen in ein Zwischenrad 4 ein, welches mit einem Antriebsrad einer nicht näher dargestellten Getriebeabtriebswelle über eine Verzahnung in Verbindung steht, und überträgt ein Abtriebsmoment der Abtriebswelle über die Ritzelwelle 3A und einem daran als Kegeltrieb ausgebildeten Ritzel 3 an ein Differential 5.

Das Abtriebsstirnrad 1 mit der Seitenwelle 2 ist in dem vorliegenden Ausführungsbeispiel als eine Hohlwelle ausgebildet und weist ein Parksperrenrad 6 auf, wobei das Parksperrenrad 6 und die Seitenwelle 2 einstückig ausgebildet sind.

Die Verbindung 7 weist zwischen dem Abtriebsstirnrad 1 und der Ritzelwelle 3A radial eine formschlüssige Verbindung 17 und axial ein Verbindungselement 22 auf. Die Verbindung 7 ist in einem Bereich mit niedriger Biegebeanspruchung zwischen einer Abtriebsstirnradlagerung 8, welche ein Zylinderrollenlager 9 aufweist, und einer Lagerung 10 der Ritzelwelle 3A angeordnet, wobei die Verbindung 7 in einem an die Lagerung 10 grenzenden Bereich liegt. Die Lagerung 10 der Ritzelwelle 3A ist in bekannter Weise mit zwei Kegelrollenlager 11, 12 ausgeführt. Das Zylinderrollenlager 9 der Abtriebsstirnradlagerung 8 ist auf der der Ritzelwelle 3A abgewandten Seite des Abtriebsstirnrades 1 angeordnet, wobei der äußere Rollbahnkörper 13 des Zylinderrollenlagers 9 in einem Deckel 14 eines abgedichteten Gehäuses 15 abgestützt ist.

An der Verbindung 7 zwischen Ritzelwelle 3A und Seitenwelle 2 weisen diese einen Überlappungsbereich 16 auf, in dem die formschlüssige Verbindung 17 derart ausgebildet ist, daß die Ritzelwelle 3A mit einem Vielnutprofil teilweise in die Seitenwelle 2 einführbar ist. In dem Überlappungsbereich 16 ist an der Außenseite der Ritzelwelle 3A und in Seitenwelle 2 im vorliegenden Ausführungsbeispiel als Vielnutprofil ein Keilwellenprofil 17 vorgesehen, womit die Ritzelwelle 3A und die Seitenwelle 2 in zusammengeschobenem Zustand drehfest miteinander verbunden sind.

Da die Krafteinleitung im Bereich des Abtriebsstirnrades 1 erfolgt, liegt dort die größte Biegebeanspruchung vor. Aus diesem Grund ist die Seitenwelle 2 mit dem Abtriebsstirnrad 1 in diesem Bereich größer dimensioniert als in jenen Bereichen, die zwischen der Abtriebsstirnradlagerung 8 und der Verbindung 7 mit der Ritzelwelle 3A angeordnet sind, wobei sich der Durchmesser und die Wandstärke der Seitenwelle 2 von der Abtriebsstirnradlagerung 8 bis zu der Verbindungsstelle 7 immer weiter verjüngen.

Zur axialen Befestigung der Ritzelwelle 3A an der Seitenwelle 2 ist ein Befestigungselement 18 vorgesehen, das in dem vorliegenden Ausführungsbeispiel als eine Schraube ausgebildet ist. Die Schraube 18 wird durch eine Verengung 19 geführt, welche im Inneren der Seitenwelle 2 ausgeformt ist, und mittig in die Ritzelwelle 3A eingeschraubt. Die Verengung 19 dient dabei als Anschlag für einen Kopf der Schraube 18 in der Seitenwelle 2. Bei dem Einschrauben der Schraube 18 wird die Seitenwelle 2 an einen Absatz 20 der Ritzelwelle 3A gedrückt.

Die lösbare, axiale Befestigung der Seitenwelle 2 an der Ritzelwelle 3A mittels der Schraube 18 ermöglicht es, die Seitenwelle 2 mit dem Abtriebsstirnrad 1 auf einfache Art und Weise montieren und bei späteren Schadensfällen leicht austauschen zu können.

An der Verbindung 7 ist zwischen dem Absatz 20 und einer Stirnfläche 21 der Seitenwelle 2 ein Distanzring 22 angeordnet, der eine Zentrierung zur Fluchtung der Ritzelwelle 3A und der Seitenwelle 2 selbst bei Fertigungsungenauigkeiten ermöglicht.

Aufgrund von Fertigungstoleranzen liegt vor dem Festziehen der Schraube 18 zunächst nur eine punktförmige Berührung zwischen der Stirnfläche 21, dem Distanzring 22 und dem Absatz 20 der Ritzelwelle 3A vor.

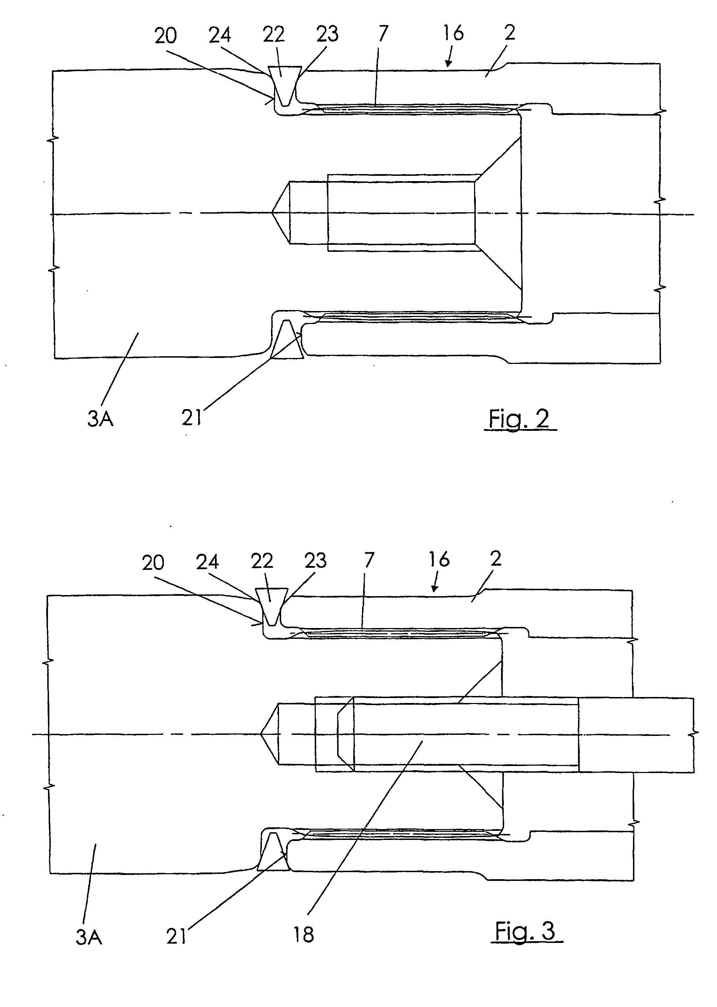

In den Fig. 2 und 3 ist ein vergrößerter Ausschnitt der Verbindung 7 mit dem Distanzring 22 gemäß Fig. 1 dargestellt. Dabei ist in Fig. 2 die Verbindung 7 vor der Befestigung der Seitenwelle 2 an der Ritzelwelle 3A mittels der Schraube 18 dargestellt. Fig. 3 stellt die Lage des Distanzringes 22 nach der Befestigung der Seitenwelle 2 an der Ritzelwelle 3A durch die Schraube 18 dar.

Der Innendurchmesser des Distanzringes 22 ist dabei derart ausgebildet, daß der Distanzring 22 über den Überlappungsbereich 16 der Ritzelwelle 3A bis zu dem Absatz 20 führbar ist. Der Außendurchmesser des Distanzringes 22 ist größer als der Außendurchmesser der Seitenwelle 2 in dem Überlappungsbereich 16 ausgebildet, damit die Stirnfläche 21 der Seitenwelle 2 an einer Seitenfläche bzw. Flanke 23 des Distanzringes 22 anliegt.

Bei der Montage wird durch das Einschrauben der Schraube 18 in die Ritzelwelle 3A die Seitenwelle 2 derart gegen den Absatz 20 der Ritzelwelle 3A in axialer Richtung geschoben, daß die Stirnfläche 21 auf die Seitenfläche 23 des Distanzringes 22 drückt und der Distanzring 22 mit seiner der Seitenfläche 23 gegenüberliegenden Seitenfläche 24 an dem Absatz 20 anliegt.

Der Distanzring 22 weist in seinem Querschnitt eine Trapezform auf, wobei die Seitenflächen 23, 24 einen Winkel α, z. B. 40°, einschließen. Der Winkel ist abhängig von dem Reibungsverhältnis und der zulässigen Zugfestigkeit des Distanzringes. Dabei verringert sich die Breite des Distanzringes 22, ausgehend von seinem Außendurchmesser hin zu seinem Innendurchmesser.

Wird durch das Festziehen der Schraube 18 das Abtriebsstirnrad 1 stärker gegen den Distanzring 22 gepreßt, entsteht durch die schrägen bzw. konusartigen Seitenflächen 23, 24 und aufgrund der nicht parallelen Stellung der Stirnfläche 21 zu dem Absatz 20 eine aus der axialen Schraubenkraft resultierende radiale Kraft F_{R} an dem Distanzring 22. Solange die radiale Kraft F_{R} größer ist als die Haftreibungskraft F_{H} der Stirnfläche 21 an der Seitenfläche 23 und des Absatzes 20 an der Seitenfläche 24, wird der Distanzring 22 aus seiner Mitte radial verschoben, bis sich ein Kräftegleichgewicht einstellt und der Distanzring 22 an den Seitenflächen 23, 24 beidseitig eine linienförmige Berührung bzw. Anlagelinie mit dem Absatz 20 und der Stirnfläche 21 ausbildet. Ist der Distanzring 22 in dieser Stellung angelangt, kann die Schraube 18 auf ein vordefiniertes Anzugsmoment angezogen werden.

Die Ritzelwelle 3A und die Seitenwelle 2 mit dem Abtriebsstirnrad 1 sind schließlich fluchtend auf einer Mittelachse angeordnet, womit ein hohe Laufruhe und damit eine geringe Belastung der Verzahnung und der Lagerungen während des Betriebes gewährleistet ist.

### Bezugszeichen

- 1: Abtriebsstirnrad
- 2: Seitenwelle
- 3: Ritzel
- 3A: Ritzelwelle
- 4: Zwischenrad
- 5: Differential
- 6: Parksperrenrad
- 7: Verbindung
- 8: Abtriebsstirnradlagerung
- 9: Zylinderrollenlager
- 10: Lagerung der Ritzelwelle
- 11: Kegelrollenlager
- 12: Kegelrollenlager
- 13: Rollbahnkörper
- 14: Deckel
- 15: Gehäuse
- 16: Überlappungsbereich
- 17: Keilwellenprofil
- 18: Befestigungselement
- 19: Verengung
- 20: Absatz
- 21: Stirnfläche der Seitenwelle
- 22: Distanzring
- 23: Seitenfläche des Distanzringes
- 24: Seitenfläche des Distanzringes

## Patentansprüche

1. Vorderachsabtrieb eines Automatgetriebes mit einem in einem abgedichteten Gehäuse angeordneten Vorderachsstirntrieb, welcher folgende Merkmale aufweist:
- ein Abtriebsstirnrad (1) ist über ein Zwischenrad (4) mit einem Antrieb wirkverbunden;
- das Abtriebsstirnrad (1) ist zur Übertragung eines Drehmoments an ein Differential mit einer koaxial angeordneten Ritzelwelle (3A) verbunden;
- die Ritzelwelle (3A) weist ein mit dem Differential in Eingriff stehendes Ritzel (3) auf;
- das Abtriebsstirnrad (1) ist einstückig mit einer Seitenwelle (2) ausgebildet;
- die Seitenwelle (2) ist mit der Ritzelwelle (3A) zwischen einer Lagerung (10) des Ritzels (3) und der Ritzelwelle (3A) und einer Abtriebsstirnradlagerung (8) mit einer formschlüssigen Verbindung (7) verbunden, in einem an die Lagerung (10) des Ritzels (3) und der Ritzelwelle (3A) angrenzenden Bereich,
**dadurch gekennzeichnet, daß** zwischen der Ritzelwelle (3A) und der Seitenwelle (2) in einem Überlappungsbereich (16) mit der formschlüssigen Verbindung (7) ein Distanzring (22) angeordnet ist.

2. Vorderachsabtrieb eines Automatgetriebes nach Anspruch 1, **dadurch gekennzeichnet, daß** der Distanzring (22) einen Innendurchmesser aufweist, welcher größer als der Außendurchmesser der Ritzelwelle (3A) im Überlappungsbereich (16) ist, und einen Außendurchmesser aufweist, welcher größer als der Außendurchmesser der Seitenwelle (2) ist, wobei sich der Querschnitt des Distanzringes (22) entgegen seinem Innendurchmesser wenigstens annähernd trapezförmig verjüngt.

3. Vorderachsabtrieb eines Automatgetriebes nach Anspruch 1, **gekennzeichnet durch** folgende Merkmale:
- die Seitenwelle (2) ist wenigstens teilweise als Hohlwelle ausgebildet;
- die Ritzelwelle (3A) und die Seitenwelle (2) weisen einen Überlappungsbereich (16) mit einer formschlüssigen Verbindung (7) auf, in dem die Ritzelwelle (3A) in die Seitenwelle (2) einführbar ist;
- die Ritzelwelle (3A) weist an ihrem dem Ritzel (3) zugewandten Ende des Überlappungsbereiches (16) einen Absatz (20) als Anlagefläche für eine Stirnfläche (21) der Seitenwelle (2) auf.

4. Vorderachsabtrieb eines Automatgetriebes nach mindestens einem der Ansprüche 1 bis 3, **dadurch gekennzeichnet, daß** die Ritzelwelle (3A) und die Seitenwelle (2) mittels einem Befestigungselement (18) lösbar axial verbunden sind.

5. Vorderachsabtrieb eines Automatgetriebes nach Anspruch 4, **dadurch gekennzeichnet, daß** das Befestigungselement als eine Schraube (18) ausgebildet ist und die Seitenwelle (2) in ihrem Inneren eine Verengung (19) aufweist, welche als Anschlag für einen Kopf der Schraube (18) ausgebildet ist.

6. Vorderachsabtrieb eines Automatgetriebes nach mindestens einem der Ansprüche 1 bis 5, **dadurch gekennzeichnet, daß** die Seitenwelle (2) einstückig mit einem Parksperrenrad (6) ausgebildet ist.

7. Vorderachsabtrieb eines Automatgetriebes nach mindestens einem der Ansprüche 1 bis 6, **dadurch gekennzeichnet, daß** sich der Durchmesser und/ oder die Wandstärke der Seitenwelle (2) von der Abtriebsstirnradlagerung (8) bis zu dem Überlappungsbereich (16) verjüngt.

8. Vorderachsabtrieb eines Automatgetriebes nach mindestens einem der Ansprüche 1 bis 7, **dadurch gekennzeichnet, daß** die Abtriebsstirnradlagerung (8) mit wenigstens einem Zylinderrollenlager (9) ausgebildet ist, welches an dem der Ritzelwelle (3A) abgewandten Seite des Abtriebsstirnrades (1) angeordnet ist.

## Claims

1. A front-axle output of an automatic transmission with a front-axle spur pinion located in a sealed housing and having the following features:
- an output spur gear (1) is actively connected to a driving gear via an intermediate gear (4);
- the output spur gear (1) is connected to a coaxially positioned pinion shaft (3A) for torque transmission to a differential;
- the pinion shaft (3A) has a pinion (3) meshing with the differential;
- the output spur gear (1) forms a single piece with a side shaft (2);
- the side shaft (2) is connected to the pinion shaft (3A) between a bearing (10) of the pinion (3) and the pinion shaft (3A) and an output spur gear bearing (8) by means of a positive connection (7), in an area adjoining the bearing (10) of the pinion (3) and the pinion shaft (3A),
**characterized**
**in that** a spacer ring (22) is arranged between the pinion shaft (3A) and the side shaft (2) in an overlap area (16) with the positive connection (7).

2. A front-axle output of an automatic transmission according to claim 1,
**characterized**
**in that** the spacer ring (22) shows an inner diameter exceeding the outer diameter of the pinion shaft (3A) in the overlap area (16) and an outer diameter exceeding the outer diameter of the side shaft (2), with the cross-section of the spacer ring (22) showing a roughly trapezoidal shape tapering towards the inner diameter.

3. A front-axle output of an automatic transmission according to claim 1,
**characterized**
**by** the following features:
- the side shaft (2) is at least partially a hollow shaft;
- pinion shaft (3A) and side shaft (2) feature an overlap area (16) with a form locking connection (7), with the pinion shaft (3A) capable of being inserted into the side shaft (2);
- at the end of the overlap area (16) facing the pinion (3), the pinion shaft (3A) has a shoulder (20) serving as a support surface for a front face (21) of the side shaft (2).

4. Front-axle output of an automatic transmission according to at least one of the claims 1 to 3,
**characterized**
**in that** pinion shaft (3A) and side shaft (2) are axially connected by means of a releasable fastening element (18).

5. Front-axle output of an automatic transmission according to claim 4,
**characterized**
**in that** the fastening element is a screw (18) and the side shaft (2) has a constriction (19) inside forming a stop for the head of the screw (18).

6. Front-axle output of an automatic transmission according to at least one of the claims 1 to 5,
**characterized**
**in that** the side shaft (2) forms a single piece with the parking lock gear (6).

7. Front-axle output of an automatic transmission according to at least one of the claims 1 to 6,
**characterized**
**in that** diameter and/or wall thickness of the side shaft (2) narrows between output spur gear bearing (8) and overlap area (16).

8. Front-axle output of an automatic transmission according to at least one of the claims 1 to 7,
**characterized**
**in that** the output spur gear bearing (8) features at least one cylinder roller bearing (9) arranged on the side of the output spur gear (1) not facing the pinion shaft (3A).

## Revendications

1. Sortie sur essieu avant d'une transmission automatique comprenant un engrenage droit d'essieu avant monté dans un carter étanche, comportant les caractéristiques suivantes :
- une roue droite de sortie (1) est reliée de manière active à un entraînement par l'intermédiaire d'une roue intermédiaire (4) ;
- la roue droite de sortie (1) est reliée à un arbre de pignon (3A) disposé coaxiaiement pour la transmission d'un couple à un différentiel ;
- l'arbre de pignon (3A) comporte un pignon (3) en prise avec le différentiel ;
- la roue droite de sortie (1) est réalisée en une seule pièce avec un arbre latéral (2) ;
- l'arbre latéral (2) est relié à l'arbre de pignon (3A), par une liaison (7) opérant par complémentarité de forme, entre un palier (10) du pignon (3) et de l'arbre de pignon (3A) et un palier (8) de la roue droite de sortie, dans une zone adjacente au palier (10) du pignon (3) et de l'arbre de pignon (3A),
**caractérisée en ce qu'**une bague entretoise (22) est disposée entre l'arbre de pignon (3A) et l'arbre latéral (2) dans une région de recouvrement (16) avec la liaison par complémentarité de forme (7).

2. Sortie sur essieu avant d'une transmission automatique selon la revendication 1, **caractérisée en ce que** la bague entretoise (22) a un diamètre intérieur qui est plus grand que le diamètre extérieur de l'arbre de pignon (3A) dans la région de recouvrement (16), et a un diamètre extérieur qui est plus grand que le diamètre extérieur de l'arbre latéral (2), la section de la bague entretoise (22) s'amincissant en direction de son diamètre intérieur avec une forme au moins approximativement trapézoïdale.

3. Sortie sur essieu avant d'une transmission automatique selon la revendication 1, **caractérisée par** les caractéristiques suivantes :
- l'arbre latéral (2) est constitué au moins partiellement par un arbre creux ;
- l'arbre de pignon (3A) et l'arbre latéral (2) comportent une région de recouvrement (16) avec une liaison opérant par complémentarité de forme (7), dans laquelle l'arbre de pignon (3A) peut être engagé dans l'arbre latéral (2) ;
- l'arbre de pignon (3A) comporte, à son extrémité de la région de recouvrement (16) qui est dirigée vers le pignon (3), un épaulement (20) servant de surface d'appui pour une surface frontale (21) de l'arbre latéral (2).

4. Sortie sur essieu avant d'une transmission automatique selon au moins l'une des revendications 1 à 3, **caractérisée en ce que** l'arbre de pignon (3A) et l'arbre latéral (2) sont assemblés axialement de façon démontable au moyen d'un élément de fixation (18).

5. Sortie sur essieu avant d'une transmission automatique selon la revendication 4, **caractérisée en ce que** l'élément de fixation est constitué par une vis (18) et **en ce que** l'arbre latéral (2) comporte dans sa cavité intérieure un rétrécissement (19) servant de butée pour une tête de la vis (18).

6. Sortie sur essieu avant d'une transmission automatique selon au moins l'une des revendications 1 à 5, **caractérisée en ce que** l'arbre latéral (2) est réalisé en une seule pièce avec une roue de verrouillage de stationnement (6).

7. Sortie sur essieu avant d'une transmission automatique selon au moins l'une des revendications 1 à 6, **caractérisée en ce que** le diamètre et/ou l'épaisseur de paroi de l'arbre latéral (2) s'amincissent du palier (8) de la roue droite de sortie jusqu'à la région de recouvrement (16).

8. Sortie sur essieu avant d'une transmission automatique selon au moins rune des revendications 1 à 7, **caractérisée en ce que** le palier (8) de la roue droite de sortie est réalisé avec au moins un palier à rouleaux cyiindriques (9) qui est disposé sur le côté de la roue droite de sortie (1) qui est éloigné de l'arbre de pignon (3A).
